# EUROPEAN PATENT SPECIFICATION

(11) **EP 2 572 986 B1**
(45) Date of publication and mention of the grant of the patent: **26.04.2017**
(21) Application number: 12185418.6
(22) Date of filing: 21.09.2012
(51) Int. Cl.: B64D 27/26, B64D 27/18, B64D 27/12

(54) **Gas turbine engine mount assembly**
Gasturbinenmotormontieranordnung
Dispositif de montage de moteur à turbine à gaz

(30) Priority: 23.09.2011 US 201113242908
(43) Date of publication of application: 27.03.2013
(73) Proprietor: United Technologies Corporation, Farmington, CT 06032 (US)
(72) Inventor: Suciu, Gabriel L., Glastonbury, CT 06033 (US); Dye, Christopher M., Holladay, UT 84117 (US); Merry, Brian D., Andover, CT 06232 (US)
(74) Representative: Hull, James Edward

(56) References cited:
- EP-A2- 2 025 898
- EP-A2- 2 103 516
- US-A1- 2005 194 493
- US-A1- 2009 314 881

## Description

### BACKGROUND

The present invention relates to a gas turbine engine and more particularly to an engine mount assembly for mounting a gas turbine engine to an aircraft pylon.

Gas turbine engines are typically mounted at various points of an aircraft, such as a pylon that extends from the wing of the aircraft. A mount assembly is often used to support the gas turbine engine and connect the engine to the pylon. The mount assembly supports the engine vertically, laterally and axially and allows for the transmission of a variety of static and dynamic loads between the engine and the aircraft via the pylon.

The loads experienced by the mount assembly and the gas turbine engine include vertical loads and side loads (i.e. loads experienced perpendicular to a centerline axis of the engine). An example of such loads occurs when the aircraft performs an end of the runway roll. This maneuver generates a moment in the cowl of the engine that is typically absorbed by narrow engine cases and the pylon. However, such an arrangement can lead to bending of the core (commonly called "backbone bending") of the engine, which reduces engine performance.

Additional loads experienced by the mount assembly include torque loads (i.e. loads experienced in the direction of rotation of the gas turbine engine), and thrust loads (i.e. loads experienced in an opposing direction to aircraft travel). In addition to the loads that result from aircraft maneuvers, the mount assembly is subjected to static weight loads of the engine and to thermal expansion and retraction during operation.

Typical mount assemblies for a gas turbine engine dissipate some loads including vertical loads and side loads at a forward mount located at the low pressure compressor (LPC) case at a front portion of the engine. Such mount assemblies also include a rear mount that dissipates vertical loads, side loads, torque loads, and thrust loads experienced adjacent a rear end of the engine.

Unfortunately, mount assemblies of this type are unable to adequately react all loads created during operation of the engine. Thus, the casing surrounding various components distorts and flexes (i.e. is subject to backbone bending). This distortion can cause the clearances between the static casing and a plurality of rotating blade tips encased within the static casing to increase, negatively effecting engine performance.

A mount assembly having some of the features of claim 1 is disclosed in US 2009/314881.

### SUMMARY

The present invention provides an engine mount assembly as recited in claim 1.

### BRIEF DESCRIPTION OF THE DRAWINGS

FIG. 1A is a schematic sectional view of a gas turbine engine including a pylon and an engine mount assembly.
FIG. 1B is a semi-exploded perspective view of the gas turbine engine.
FIG. 2 is an exploded perspective view of an axial linkage assembly between a fan case and a pylon superstructure.
FIG. 3A is a perspective view of a section of the pylon showing one embodiment of a forward mount and interface feature.
FIG. 3B is a perspective view of a section of pylon showing another embodiment of a forward mount and interface feature.
FIG. 4A is a rear view of a section of pylon showing one embodiment of a rear mount and the interface feature.
FIG. 4B is a rear view of a section of pylon showing another embodiment of a rear mount and the interface feature.

### DETAILED DESCRIPTION

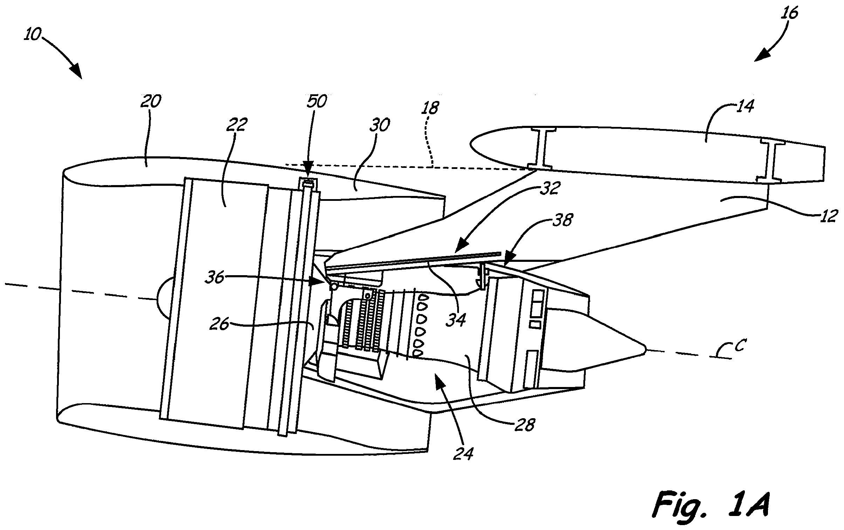

FIG. 1A illustrates one embodiment of a gas turbine engine 10 suspended from an engine pylon 12 connected to a wing 14 of an aircraft 16. Engine pylon 12 is enclosed in a pylon superstructure 18 (which is illustrated in phantom in the view shown). Gas turbine engine 10 includes a nacelle 20, a fan case 22, a core 24, an intermediate case 26, and a mid-turbine frame 28. Nacelle 20 includes doors 30. Engine pylon 12 includes a mount assembly 32 and an interface feature 34. Mount assembly 32 includes a forward mount 36 and a rear mount 38.

The construction and operational characteristics of gas turbine engine 10 are known, and therefore, will not be described in great detail. In the embodiment shown in the FIGURES, gas turbine engine 10 is a turbofan gas turbine engine but the invention is applicable to other types of gas turbine engines. Gas turbine engine 10 is connected to wing 14 by pylon 12. Pylon 12 is enclosed by pylon superstructure 18 which is connected to nacelle 20 (and in particular doors 30 of nacelle 20). Nacelle 20 encloses fan case 22, which is disposed adjacent to core 24.

In the embodiment shown in FIG. 1A, pylon 12 is core 24 reaching and core 24 mounted utilizing mount assembly 32. In particular, core 24 is a static structure generally comprised of several sub-structures and is often referred to as the engine backbone. One of such sub-structures is intermediate case 26 which is a stator structure that encloses portions of compressor section of gas turbine engine 10. In the embodiment shown, intermediate case 26 encloses substantially the portion of gas turbine engine 10 upstream of high pressure compressor section of gas turbine engine 10. In other embodiments, intermediate case 26 can extend to include portions of the high pressure compressor.

Stator mid-turbine frame 28 (also called a thrust case) is disposed rearward of intermediate case 26 and encloses hot sections of core 24 such as a combustor, a low pressure turbine section, and a high pressure turbine section. The number of hot sections mid-turbine frame 28 encompasses will vary from embodiment to embodiment. Further discussion of components of core 24 including intermediate case 26 and mid-turbine frame 28 can be found in United States Patent Application Numbers 2009/0056343, 2009/0236469, and 2009/0314881.

During operation, airflow is drawn into the gas turbine engine 10 by the fan section. A portion of the airflow bypasses the core 24 and passes through the nacelle 20 to exit gas turbine engine 10. A second portion of the airflow drawn by the fan section enters and is pressurized in the compressor sections (low and high). Fuel is mixed with the pressurized air and combusted within the combustor. The combustion gases are discharged through the turbine sections (high and low), which extract energy therefrom for powering the compressor sections and the fan section.

Aft portions of nacelle 20 comprise doors 30, which can be opened to expose core 24 and other components of gas turbine engine 10 for assembly and repair. Doors 20 are fastened or otherwise connected to pylon superstructure 18. As shown in FIG. 1A, gas turbine engine 10 is mounted to aircraft 16 structure such as wing 14 through mount assembly 32 attached to pylon 12 at both forward and aft positions that comprise forward mount 36 and rear mount 38, respectively. In the embodiment shown in FIG. 1A, interface feature 34 extends along pylon 12 between forward mount 36 and rear mount 38 and interfaces and mates with a feature on doors 30 to react torque loads.

Pylon 12 extends along and interfaces with doors 30. Additionally, the forward most extent of pylon 12 extends to adjacent intermediate case 26 of core 24. Forward mount 36 is connected to pylon 12 at the forward most extend of pylon 12. Additionally, forward mount 36 is connected to intermediate case 26. As will be discussed subsequently, the connections between forward mount 36 and intermediate case 26 can be made at or near 3 o'clock and 9 o'clock relative to a centerline axis C of gas turbine engine 10 (when viewed along centerline axis C). This allows forward mount 36 to react thrust loads (i.e. loads experienced in an opposing direction to aircraft travel) at intermediate case 26 substantially parallel to the centerline axis C of gas turbine engine 10. In one embodiment, forward mount 36 additionally is capable of reacting a torque load (i.e. loads experienced in the direction of rotation of the gas turbine engine) at the intermediate case 26 as well as vertical and side loads (i.e. loads experienced perpendicular to a centerline axis of the engine). In yet another embodiment, forward mount 36 is capable of reacting only vertical and side loads in addition to thrust loads at the intermediate case 26.

Connecting forward mount 36 at or adjacent 3 o'clock and 9 o'clock relative to a centerline axis C of gas turbine engine 10 to react thrust load substantially parallel to the centerline axis C of gas turbine engine 10 reduces the likelihood of backbone bending of core 24 occurring during most operational maneuvers of aircraft 16.

As used in this disclosure, "transmission of", "react", and "transfer" load means to absorb a load and dissipate the load to another location or structure of gas turbine engine 10. Similarly, terms such as "front", "forward", "aft", "rear", "rearward" should be understood as positional terms in reference to the direction of airflow through gas turbine engine 10.

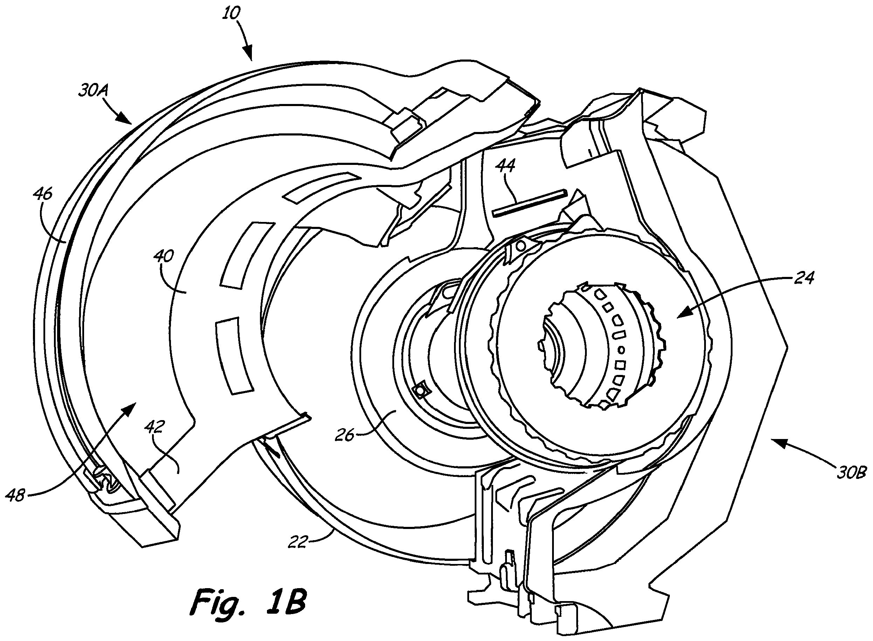

FIG. 1B shows a semi-exploded view of gas turbine engine 10 including fan case 22, core 24, intermediate case 26, and doors 30A and 30B. Additionally, doors 30A and 30B include an inner diameter cowl 40, struts 42, interface feature 44, and outer diameter cowl 46. Inner diameter cowl 40 and outer diameter cowl 46 define bypass flow path 48. FIG. 1B is a perspective view from aft of gas turbine engine 16 with pylon 12 (FIG. 1A) and pylon superstructure 18 (FIG. 1A) removed. Doors 30A and 30B enclose pylon 12 (FIG. 1A) and are connected to pylon superstructure 18 (FIG. 1 A).

FIG. 1B shows door 30A drawn back away from core 24. Intermediate case 26 is disposed at a forward portion of core 24. As previously discussed doors 30A and 30B comprise rearward portions of nacelle 20 (FIG. 1A), which can be can be opened to expose core 24 and other components of gas turbine engine 10 for assembly and repair.

Doors 30A and 30B are disposed to either side of core 24. In particular, inner diameter cowl 40 of doors 30A and 30B surrounds core 24. Inner diameter cowl 40 comprises an inner diameter flow path for air bypassing core 24 along bypass flow path 48. Similarly, outer diameter cowl 46 comprises an outer diameter flow path for air bypassing core 24 along bypass flow path 48. Inner diameter cowl 40 is connected to outer diameter cowl 46 by struts 42.

As shown in FIG. 1B, interface feature 44 can be disposed along a surface of one strut 42 that abuts and engages pylon 12 (FIG. 1A). Interface feature 44 extends along doors 30A and 30B and comprises a tongue feature that extends from the strut 42. When doors 30A and 30B are closed around pylon 12, interface feature 44 mates with corresponding interface feature 34 (in one embodiment a groove) on pylon 12. In this manner, interface features 34 and 44 allow for transmission of torque loads from pylon 12 to doors 30A and 30B. In other embodiments, interface features 34 and 44 may comprise other suitable structures for transferring torque load known in the art.

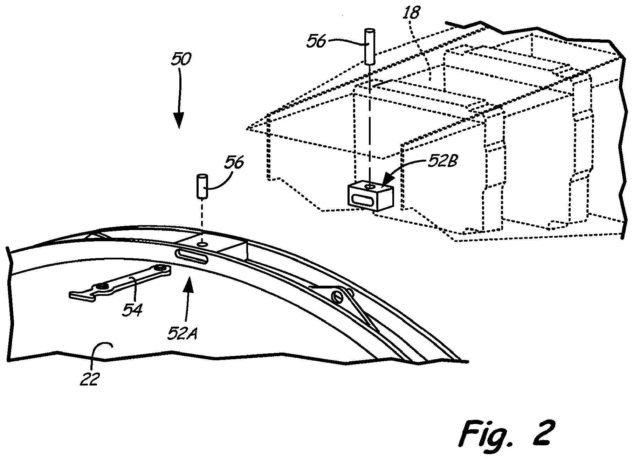

FIG. 2 shows an exploded perspective view of an axial linkage assembly 50 between fan case 22 and pylon superstructure 18 (shown in phantom). Axial linkage assembly 50 includes receptacles 52A and 52B, an axial member 54, and one or more pins 56.

Axial linkage assembly 50 is disposed at an interface between fan case 22 and pylon superstructure 18. Thus, axial linkage assembly 50 extends through an aft portion of fan case 22 into pylon superstructure 18.

As shown in FIG. 2, receptacle 52A is formed in fan case 22 along an aft portion thereof. Receptacle 52A is adapted to receive axial member 54. Axial member 54 is disposed generally axially with respect to the centerline axis A of gas turbine engine 10 (FIG. 1A) and extends through receptacle 52A and is received in receptacle 52B. Receptacle 52B is disposed in pylon superstructure 18. Axial member 54 is adapted with holes that receive one or more pins 56. Each pin 56 extends through receptacle 52A and 52B, respectively, and axial member 54. Pins 56 extend generally radially relative to the centerline axis C of the gas turbine engine 10.

Pins 56 give axial linkage assembly 50, degrees of freedom in all direction but axial direction relative to centerline axis C. Thus, axial linkage assembly 50 does not react load in directions other than the axial direction. In this manner, axial linkage assembly 50 reduces or eliminates transmission of a moment generated on nacelle 20 (when aircraft 16 performs certain maneuvers such as an end of the runway roll) to pylon 12 and core 24. By reducing or eliminating transmission of moment to core 24, bending of the core 24 (backbone bending) can be reduced. Thus, performance of gas turbine engine 10 can be better maintained.

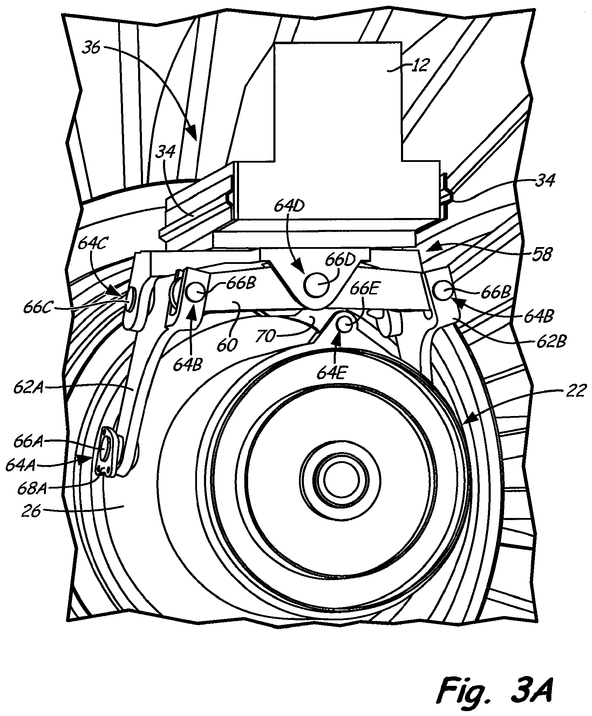

FIG. 3A shows a perspective view of a section of pylon 12, interface feature 34, and one embodiment of forward mount 36. Forward mount 36 includes a platform 58, a wiffle tree assembly 60, a first and second A-arms 62A and 62B, ball joints 64A, 64B, 64C, 64D and 64E, pins 66A, 66B, 66C, 66D and 66E, case bosses 68A and 68B (only one shown in FIG. 3A), and drag link 70.

Forward mount 36 is attached directly to aircraft structure such as pylon 12 by an outer radial portion of platform 58. Inner radial portion of platform 58 has a linkage assembly and is connected to first and second A-arms 62A and 62B at opposing outer ends. First and second A-arms 62A and 62B are additionally connected to intermediate case 26 as well as whiffletree assembly 60. Whiffletree assembly 60 is connected to a rear central portion of platform 58. Whiffletree assembly 60 is connected to first A-arm 62A at a first end and to second A-arm 62B and at a second opposing end. First A-arm 62A and second A-arm 62B are connected to either side of intermediate case 26 while whiffletree assembly 60 and platform 58 are disposed generally above case 26 between first and second A-arms 62A and 62B. In the embodiment shown in FIG. 3A, drag link 70 connects intermediate case 26 to platform 58. Although not illustrated in the embodiment shown in FIG. 3A, various additional components such as bushings and/or vibration isolators can additionally be utilized with forward mount 36.

As shown, whiffletree assembly 60 has a central ball joint 64D extending therethrough. Central ball joint 64D receives pin 66D therein. Additionally, pin 66D extends into a forward portion of platform 58. As will be discussed in further detail subsequently, whiffletree assembly 60 allows engine thrust loads to be equalized and transmitted to pylon 12 through platform 58. This dual thrust link configuration is accomplished by central ball joint 64D and pin 66D, which allow whiffletree assembly 60 to rotate to equalize thrust forces in the axial direction relative to centerline axis C. A sliding linkage between whiffletree assembly 60 and first and second A arms 62A and 62B operates as an equalizing link for vertical loads.

First A-arm 62A and second A-arm 62B are shown as a rigid single piece structure with a generally boomerang shape. Each A-arm 62A and 62B has a first ball joint 64A (only one is shown if FIG. 3A) extending therethrough adjacent a first distal end thereof. First distal end is disposed adjacent intermediate case 26. In one embodiment, first ball joints 64A extend through A-arm 62A and 62B and are positioned at substantially a 9 o'clock and 3 o'clock position relative to the centerline axis C (when viewing intermediate case 26 along centerline axis C). Pins 66A extend through first ball joints 64A and connect to case bosses 68A and 68B which are mounted on intermediate frame 26. Thus, in the embodiment shown in FIG. 3A, pins 66 and case bosses 68 are positioned at substantially a 9 o'clock and 3 o'clock position relative to the centerline axis C allowing first and second A-arms 62A and 62B to react a thrust load at intermediate case 26 substantially parallel to the centerline axis C. By resolving thrust load substantially parallel to the centerline axis C, backbone bending of core 24 (FIGS. 1A and 1B) during most operating conditions of engine 10 can be reduced. In other embodiments, ball joints 64A, pins 66A, and case bosses 68A can be disposed in a position other than the 9 o'clock and 3 o'clock position relative to the centerline axis C so as to react thrust in a vector that is not parallel to the centerline axis C.

Each A-arm 62A and 62B has second ball joint 64B positioned at a rearward end thereof. In the embodiment shown, second ball joints 64B receive pins 66B therethrough along a trailing edge of first and second A-arms 62A and 62B. Pins 66B additionally extend through first and second ends of whiffletree assembly 60. In the embodiment shown, second ball joints 64B and pins 66B are constructed to permit sliding movement of the first and second A-arm 62A and 62B relative to whiffletree assembly 60 to allow a vertical load to be reacted by whiffletree assembly 60.

Each A-arm 62A and 62B has third ball joint 64C (only one is shown in FIG. 3A) positioned at a forward end thereof generally above first ball joint 64A relative to centerline axis C. Third ball joints 64C receive pins 66C therethrough. Pins 66C additionally extend into platform 58 at a forward portion thereof. Third ball joints 64C and pins 66C allow first A-arm 62A and the second A-arm 62B to support the vertical weight load of engine 10 and additionally transmit thrust loads from intermediate case 26 to the platform 58.

Drag link 70 includes ball joint 64E and is mounted to intermediate case 26 by pin 66E. Although not shown in FIG. 3A, drag link 70 includes an additional ball joint and is mounted to the platform 58 by a pin (not shown). The drag link 70 operates to react torque loads at the intermediate case 26. Thus, in the manner described, forward mount 36 shown in FIG. 3A reacts thrust, vertical, side, and torque loads.

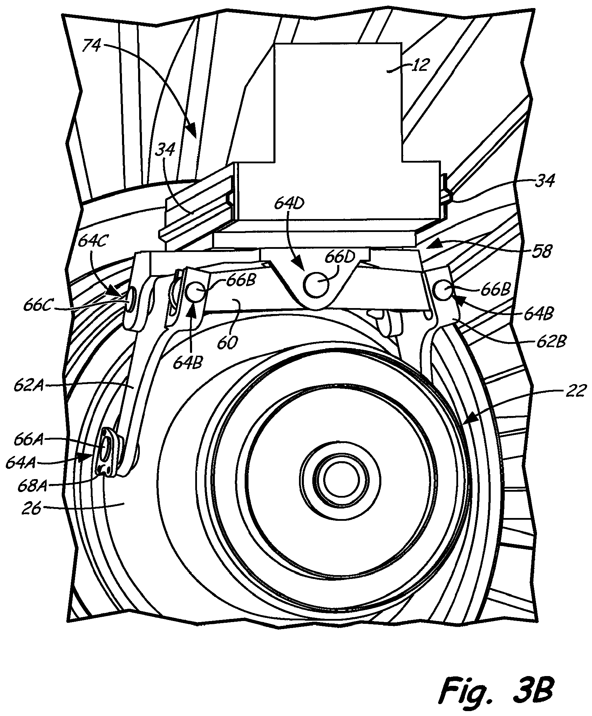

FIG. 3B shows a perspective view of a section of pylon 12, interface feature 34, and another embodiment of forward mount 74. Forward mount 74 is similar to forward mount 36 (FIG. 3A) except that forward mount 74 does not include drag link 70. Therefore, forward mount 74 does not react a torque load. With the embodiment of mount shown in FIG. 3B, interface features 34 and 44 would not be necessary between doors 30 (FIG. 3B) and pylon 12.

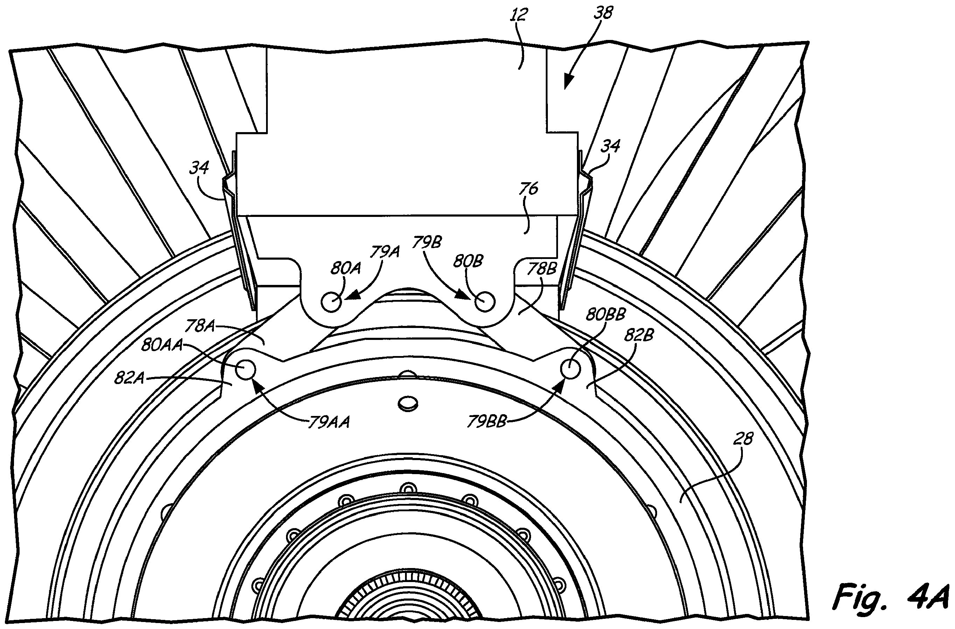

FIG. 4A shows a rear view of a first embodiment of rear mount 38 from aft thereof. As will be explained subsequently, rear mount 38 is utilized in combination with forward mount 36 shown in FIG. 3A and includes a main body 76, tangential links 78A and 78B, ball joints 79A, 79AA, 79B, and 79BB, and pins 80A, 80AA, 80B, 80BB. Mid-turbine frame 28 includes flanges 82A and 82B.

Main body 76 is mounted to a rear portion of pylon 12 along an outer radial portion and comprises a relatively thin plate like structure that extends generally radially therefrom toward centerline axis C. Main body 76 includes adapted linkage portions that connect to tangential links 78A and 78B. Tangential links 78A and 78B extend from main body 76 and connect to mid-turbine frame 28. In the embodiment shown, tangential link 78A includes ball joints 79A and 79AA which receive pins 80A and 80AA to mount rear mount 38 to flange 82A. Ball joints 79A and 79AA and pins 80A and 80AA allow tangential link 78A to support the vertical weight load of engine 10 and react a side load at the mid-turbine frame 28. Similarly, tangential link 78B includes ball joints 79B and 79BB which receive pins 80B and 80BB to mount rear mount 38 to flange 82B. Ball joints 79B and 79BB and pins 80B and 80BB allow tangential link 78B to support the vertical weight load of engine 10 and react a side load at the mid-turbine frame 28.

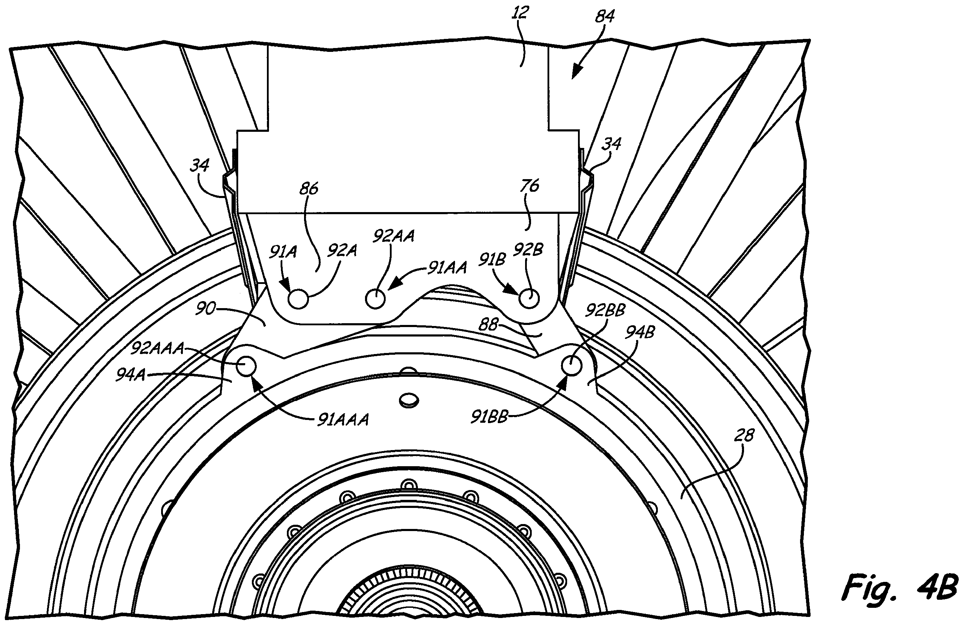

FIG. 4B shows a second embodiment of rear mount 84. Rear mount 84 is utilized in combination with forward mount 74 of FIG. 3B and includes a main body 86, tangential link 88, boomerang link 90, ball joints 91A, 91AA, 91AAA, 91B, and 91BB, and pins 92A, 92AA, 92AAA, 92B, and 92BB. Mid-turbine frame 28 includes flanges 94A and 94B.

Rear mount 84 has a design similar to that of rear mount 38 (FIG. 4A) but with the substitution of boomerang link 90, which allows the rear mount 84 to react torque load at mid-turbine frame 28 in addition to vertical loads and side loads. Main body 86 is connected to pylon 12. Main body 86 includes adapted linkage portions that connect to tangential link 88 and boomerang link 90. Tangential link 88 and boomerang link 90 extend from main body 86 and connect to mid-turbine frame 28. In the embodiment shown, boomerang link 90 includes ball joints 91A, 91AA, and 91AAA which receive pins 92A, 92AA, and 92AAA to mount rear mount 84 to flange 94A. Ball joints 91A, 91AA, and 91AAA and pins 92A, 92AA, and 92AAA allow boomerang link 90 to support the vertical weight load of engine 10, react side loads, and react torque loads at the mid-turbine frame 28. Tangential link 88 includes ball joints 91B and 91BB which receive pins 92B and 92BB to mount rear mount 38 to flange 94B.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An engine mount assembly (36; 74) of a gas turbine engine (10), comprising:
a pylon (12);
an intermediate case (26) of a gas turbine engine (10);
a forward mount platform (58) connected to the pylon (12) and disposed adjacent the intermediate case (26); a whiffletree assembly (60) connected to the forward mount platform (58) through a first balljoint; and
a first A-arm (62A) connected to a first side of the intermediate case (26) and a second A-arm (62B) connected to a second opposing side of the intermediate case (26), wherein the first and second A-arms (62A, 62B) are mounted to the forward mount platform (58) and mounted to opposing ends of the whiffletree (60), and wherein the first and second A-arms (62A, 62B) react a thrust load at the intermediate case (26) substantially parallel to a centerline axis (C) of the gas turbine engine (10).

2. The engine mount assembly (36; 74) of claim 1, wherein the first and second A-arms (62A, 62B) are mounted to the forward mount platform (58) and the whiffletree (60), and connected to the intermediate case (26) through a plurality of ball joints (64A).

3. The engine mount assembly (36; 74) of claim 1 or 2, wherein the connection of the first A-arm (62A) with the intermediate case (26) and the connection of the second A-arm (62B) with the intermediate case (26) are disposed in a 3 o'clock position and a 9 o'clock position relative to the centerline axis (C) of the gas turbine engine (10) such that the first and second A-arms (62A, 62B) react the thrust load parallel to the centerline axis (C).

4. The engine mount assembly (36) of any preceding claim, further comprising a drag link (70) connected to the intermediate case (26) and the forward mount platform (58), wherein the drag link (70) reacts a torque load at the intermediate case (26).

5. The engine mount assembly (36; 74) of any preceding claim, further comprising one or more doors (30) connected to a pylon superstructure (18) surrounding a portion of the pylon (12), the one or more doors (30) having a first interface feature (44) that extends along a length thereof, wherein the pylon (12) includes a second interface feature (44) adapted to mate with the first interface feature (44) to react a torque load at the pylon (12).

6. The engine mount assembly (36; 74) of any preceding claim, further comprising a rear mount assembly (38, 84) mounted to the pylon (12) and disposed at a distance along the gas turbine engine (10) from the forward mount assembly (36, 74), wherein the rear mount assembly (38, 84) is connected to a mid-turbine frame (28) of the gas turbine engine (10) by one or more tangential links (78A, 78B) so as to react a vertical load and a side load at the mid-turbine frame (28).

7. The engine mount assembly (36; 74) of any of claims 1 to 5, further comprising a rear mount assembly (84) mounted to the pylon (12) and disposed at a distance along the gas turbine engine (10) from the forward mount assembly (74), wherein the rear mount assembly (84) is connected to a mid-turbine frame (28) of the gas turbine engine (10) by one or more tangential links (78A, 78B) and at least one boomerang link (90) so as to react a vertical load, a side load, and a torque load at the mid-turbine frame (28).

## Patentansprüche

1. Motorbaugruppe (36; 74) eines Gasturbinenmotors (10), umfassend:
einen Pylon (12);
ein Zwischengehäuse (26) eines Gasturbinenmotors (10);
eine vorderseitig montierte Plattform (58), die mit dem Pylon (12) verbunden ist und neben dem Zwischengehäuse (26) angeordnet ist; eine Wehbaum-Baugruppe (60), die mit der vorne montierten Plattform (58) durch ein erstes Kugelgelenk verbunden ist; und
einen ersten A-Arm (62A), der mit einer ersten Seite des Zwischengehäuses (26) verbunden ist, und einen zweiten A-Arm (62B), der mit einer zweiten gegenüberliegenden Seite des Zwischengehäuses (26) verbunden ist, wobei die ersten und zweiten A-Arme (62A, 62B) an die vorderseitig montierte Plattform (58) montiert und an gegenüberliegenden Enden des Wehbaums (60) montiert sind, und wobei die ersten und zweiten A-Arme (62A, 62B) auf eine Axialkraft an dem Zwischengehäuse (26) im Wesentlichen parallel zu einer Mittelachse (C) des Gasturbinenmotors (10) reagieren.

2. Motorbaugruppe (36; 74) nach Anspruch 1, wobei die ersten und zweiten A-Arme (62A, 62B) an der vorderseitig montierten Plattform (58) und dem Wehbaum (60) montiert sind und mit dem Zwischengehäuse (26) durch eine Vielzahl von Kugelgelenken (64A) verbunden sind.

3. Motorbaugruppe (36; 74) nach Anspruch 1 oder 2, wobei die Verbindung des ersten A-Arms (62A) mit dem Zwischengehäuse (26) und die Verbindung des zweiten A-Arms (62B) mit dem Zwischengehäuse (26) in einer 3-Uhr-Position und einer 9-Uhr-Position im Verhältnis zu der Mittelachse (C) des Gasturbinenmotors (10) angeordnet sind, sodass die ersten und zweiten A-Arme (62A, 62B) auf die Axialkraft parallel zu der Mittelachse (C) reagieren.

4. Motorbaugruppe (36) nach einem der vorstehenden Ansprüche, weiterhin umfassend ein Gegenkraftglied (70), das mit dem Zwischengehäuse (26) und der vorne montierten Plattform (58) verbunden ist, wobei das Gegenkraftglied (70) auf eine Drehmomentbelastung an dem Zwischengehäuse(26) reagiert.

5. Motorbaugruppe (36; 74) nach einem der vorstehenden Ansprüche, weiterhin umfassend eine oder mehrere Türen (30), die mit einer Pylon-Superstruktur (18) verbunden sind, welche einen Teil des Pylons (12) umgibt, wobei die eine oder mehreren Türen (30) ein erstes Verbindungsmerkmal (44) aufweisen, das sich entlang einer Länge davon erstreckt, wobei der Pylon (12) ein zweites Verbindungsmerkmal (44) beinhaltet, das zur Anpassung mit dem ersten Verbindungsmerkmal (44) angepasst ist, um auf ein Lastmoment an dem Pylon (12) zu reagieren.

6. Motorbaugruppe (36; 74) nach einem der vorstehenden Ansprüche, weiterhin umfassend eine hinterseitig montierte Baugruppe (38, 84), die an dem Pylon (12) montiert ist, und in einer Entfernung entlang des Gasturbinenmotors (10) von der vorderseitig montierten Baugruppe (36, 74) angeordnet ist, wobei die hinterseitig angeordnete Baugruppe (38, 84) mit einen mittleren Turbinenrahmen (28) des Gasturbinenmotors (10) durch ein oder mehrere tangentiale Glieder (78A, 78B) verbunden ist, um auf eine vertikale Last und eine Seitenlast an dem mittleren Turbinenrahmen (28) zu reagieren.

7. Motorbaugruppe (36; 74) nach einem der Ansprüche 1 bis 5, weiterhin umfassend eine hinterseitig montierte Baugruppe (84), die an dem Pylon (12) montiert ist und in einer Entfernung entlang des Gasturbinenmotors (10) von der vorderseitig montierten Baugruppe (74) angeordnet ist, wobei die hinterseitig angeordnete Baugruppe (84) mit einen mittleren Turbinenrahmen (28) des Gasturbinenmotors (10) durch ein oder mehrere tangentiale Glieder (78A, 78B) und mindestens ein Bumerang-Glied (90) verbunden ist, um auf eine vertikale Last, eine Seitenlast und ein Lastmoment an dem mittleren Turbinenrahmen (28) zu reagieren.

## Revendications

1. Ensemble bâti-moteur (36 ; 74) d'un moteur de turbine à gaz (10), comprenant :
un pylône (12) ;
un carter intermédiaire (26) d'un moteur de turbine à gaz (10) ;
une plateforme de bâti avant (58) raccordée au pylône (12) et disposée adjacente au carter intermédiaire (26) ; un ensemble palonnier (60) raccordé à la plateforme de bâti avant (58) par l'intermédiaire d'un premier joint à rotule ; et
un premier bras triangulaire (62A) raccordé à un premier côté du carter intermédiaire (26) et un second bras triangulaire (62B) raccordé à un second côté opposé du carter intermédiaire (26), les premier et second bras triangulaires (62A, 62B) étant montés sur la plateforme de bâti avant (58) et montés sur des extrémités opposées du palonnier (60), et dans lequel les premier et second bras triangulaires (62A, 62B) réagissent à une poussée axiale au niveau du carter intermédiaire (26) sensiblement parallèle à un axe de ligne centrale (C) du moteur de turbine à gaz (10).

2. Ensemble bâti-moteur (36 ; 74) selon la revendication 1, dans lequel les premier et second bras triangulaires (62A, 62B) sont montés sur la plateforme de bâti avant (58) et le palonnier (60), et raccordés au carter intermédiaire (26) par l'intermédiaire d'une pluralité de joints à rotule (64A).

3. Ensemble bâti-moteur (36; 74) selon la revendication 1 ou 2, dans lequel le raccord du premier bras triangulaire (62A) au carter intermédiaire (26) et le raccord du second bras triangulaire (62B) au carter intermédiaire (26) sont situés à une position à 3 heures et à une position à 9 heures par rapport à l'axe de ligne centrale (C) du moteur de turbine à gaz (10), de sorte que les premier et second bras triangulaires (62A, 62B) réagissent à la poussée axiale parallèle à l'axe de ligne centrale (C).

4. Ensemble bâti-moteur (36) selon une quelconque revendication précédente, comprenant en outre une barre de direction (70) raccordée au carter intermédiaire (26) et à la plateforme de bâti avant (58), dans lequel la barre de direction (70) réagit à une charge de pivotement au niveau du carter intermédiaire (26).

5. Ensemble bâti-moteur (36; 74) selon une quelconque revendication précédente, comprenant en outre une ou plusieurs portes (30) raccordées à une superstructure de pylône (18) entourant une partie du pylône (12), les une ou plusieurs portes (30) ayant un premier élément d'interface (44) qui s'étend le long d'une de ses longueurs, dans lequel le pylône (12) comporte un second élément d'interface (44) adapté pour correspondre au premier élément d'interface (44) pour réagir à une charge de pivotement au niveau du pylône (12).

6. Ensemble bâti-moteur (36 ; 74) selon une quelconque revendication précédente, comprenant en outre un ensemble de bâti arrière (38, 84) monté sur le pylône (12) et situé à distance le long du moteur de turbine à gaz (10) à partir de l'ensemble de bâti avant (36, 74), dans lequel l'ensemble de bâti arrière (38, 84) est raccordé à un cadre de turbine intermédiaire (28) du moteur de turbine à gaz (10) par une ou plusieurs liaisons tangentielles (78A, 78B), de façon à réagir à une charge verticale et à une charge latérale au niveau du cadre de turbine intermédiaire (28).

7. Ensemble bâti-moteur (36 ; 74) selon l'une quelconque des revendications 1 à 5, comprenant en outre un ensemble de bâti arrière (84) monté sur le pylône (12) et situé à distance le long du moteur de turbine à gaz (10) à partir de l'ensemble de bâti avant (74), dans lequel l'ensemble de bâti arrière (84) est raccordé à un cadre de turbine intermédiaire (28) du moteur de turbine à gaz (10) par une ou plusieurs liaisons tangentielles (78A, 78B) et au moins une liaison boomerang (90) de sorte à réagir à une charge verticale, une charge latérale et une charge de pivotement au niveau du cadre de turbine intermédiaire (28).
